(19) **Europäisches Patentamt**
**European Patent Office**
**Office européen des brevets**

(11) **EP 3 957 691 B1**

(12) **EUROPÄISCHE PATENTSCHRIFT**

(45) Veröffentlichungstag und Bekanntmachung des Hinweises auf die Patenterteilung:
**01.10.2025 Patentblatt 2025/40**

(21) Anmeldenummer: **21189762.4**

(22) Anmeldetag: **05.08.2021**

(51) Internationale Patentklassifikation (IPC):
*C09D 5/08* (2006.01)    *C09D 5/10* (2006.01)
*C09D 163/00* (2006.01)   *C08K 3/36* (2006.01)
*C08K 9/06* (2006.01)    *C09D 7/62* (2018.01)
*C09G 1/00* (2006.01)    *C09J 171/00* (2006.01)

(52) Gemeinsame Patentklassifikation (CPC):
(C-Sets verfügbar)
**C09D 7/62; C08K 3/36; C08K 9/06; C09D 5/10;
C09D 163/00; C09G 1/00;** C08K 2003/0893
(Forts.)

(54) **VERWENDUNG VON SILIZIUMDIOXID ZUR VERBESSERUNG DES KATHODISCHEN KORROSIONSSCHUTZES VON GRUNDIERUNGSBESCHICHTUNGEN**

USE OF SILICON DIOXIDE TO IMPROVE THE CATHODIC CORROSION PROTECTION OF PRIMER COATINGS

UTILISATION DE DIOXYDE DE SILICIUM POUR AMÉLIORER LA PROTECTION CATHODIQUE CONTRE LA CORROSION DES REVÊTEMENTS DE COUCHE PRIMAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.08.2020 EP 20190611**

(43) Veröffentlichungstag der Anmeldung:
**23.02.2022 Patentblatt 2022/08**

(73) Patentinhaber: **Evonik Operations GmbH**
**45128 Essen (DE)**

(72) Erfinder:
• **Hallack, Markus**
**46514 Schermbeck (DE)**
• **de Gans, Berend-Jan**
**45478 Mülheim an der Ruhr (DE)**
• **Düllmann, Florian**
**58099 Hagen (DE)**
• **Herrwerth, Sascha**
**63579 Freigericht (DE)**

(74) Vertreter: **Evonik Patent Association**
**c/o Evonik Industries AG**
**IP Management**
**Postcode 84/339**
**Rodenbacher Chaussee 4**
**63457 Hanau (DE)**

(56) Entgegenhaltungen:
CN-A- 104 710 909    CN-A- 110 172 288
KR-A- 20140 005 476

• **LU H B ET AL: "Synthesis and characterization of silica-acrylic-epoxy hybrid coatings on 430 stainless steel", SURFACE AND COATINGS TECHNOLOGY, ELSEVIER BV, AMSTERDAM, NL, vol. 204, no. 1-2, 25 September 2009 (2009-09-25), pages 91 - 98, XP026458191, ISSN: 0257-8972, [retrieved on 20090703]**
• **Z RANJBAR ET AL: "Effects of Nano Silica on the Anticorrosive Properties of Epoxy Coatings", 1 January 2013 (2013-01-01), pages 119 - 128, XP055770559, Retrieved from the Internet <URL:http://pccc.icrc.ac.ir/ article_75810_d2bacf73d4926316ca932322bb c562ef.pdf>**
• **POURHASHEM SEPIDEH ET AL: "Investigating the effect of SiO2-graphene oxide hybrid as inorganic nanofiller on corrosion protection properties of epoxy coatings", SURFACE AND COATINGS TECHNOLOGY, ELSEVIER, NL, vol. 311, 6 January 2017 (2017-01-06), pages 282 - 294, XP029907488, ISSN: 0257-8972, DOI: 10.1016/J.SURFCOAT.2017.01.013**

EP 3 957 691 B1

- **KAMALAN KIRUBAHARAN A M ET AL: "Synthesis and characterization of nanosized titanium dioxide and silicon dioxide for corrosion resistance applications", JOURNAL OF COATINGS TECHNOLOGY AND RESEARCH, SPRINGER US, BOSTON, vol. 9, no. 2, 25 November 2009 (2009-11-25), pages 163 - 170, XP035013588, ISSN: 1935-3804, DOI: 10.1007/ S11998-009-9226-9**

(52) Gemeinsame Patentklassifikation (CPC): (Forts.)

C-Sets
**C09D 163/00, C08K 3/36, C08K 3/08**

**Beschreibung**

Die Erfindung betrifft die Verwendung von Siliziumdioxid zur Verbesserung des kathodischen Korrosionsschutzes von Grundierungsbeschichtungen.

Um Metalloberflächen bzw. -substrate, wie zum Beispiel Eisen und Stahl, vor Korrosion zu schützen, werden diese mit einer Funktionsbeschichtung behandelt, die der Fachwelt gut bekannt ist. Diese Funktionsbeschichtung, auch Primerlackierung oder auch kurz Primer genannt, wird unmittelbar auf ein Metallsubstrat aufgebracht, um in einem Beschichtungssystem eine bestimmte Funktion als Grundierung, insbesondere zur Haftvermittlung und zum Korrosionsschutz, zu übernehmen. Sie enthält im allgemeinen Metallteilchen, insbesondere Zink- und/oder Aluminiumteilchen als sogenanntes Opfermetall. Üblicherweise wird auf die Grundierungsbeschichtung weitere Lackschichten aufgebracht, um Metalloberflächen bzw. -substrate noch wirksamer vor Korrosion zu schützen.

Die Funktionsbeschichtung kann sowohl als Grundierungsbeschichtung, Primerlackierung als auch als einzige Korrosionsschutzbeschichtung auf hochfeste Metallschrauben, Muttern, Federn, Bleche und/oder andere Konstruktionsteile eingesetzt werden. Solche Korrosionsschutzbeschichtungen werden auch als Zinklamellenüberzug bezeichnet.

Metallteilchen, -partikeln oder -pigmente entsprechend deren konkreten Metalls werden als Synonyme verstanden.

Grundierungs-, Funktionsbeschichtung, Grundierung, Primer und Primerlackierung werden als Synonyme verstanden.

Der antikorrosive Effekt der Grundierungs- bzw. Funktionsbeschichtung ist auf die kathodische Schutzwirkung des Metallpigments zurückzuführen. Besonders bewährt haben sich zinkhaltige Grundierungsbeschichtungen, die insbesondere zum Schutz von Maschinen und Stahlkonstruktionen, im Automobilbereich, im Bereich Brückenbau und Schiffsbau eingesetzt werden. Durch den elektrischen Kontakt zwischen den Zinkpartikeln untereinander und dem Substrat, wird eben dieses kathodisch geschützt. Das Substrat fungiert als Kathode, während sich die Zinkpartikel anodisch oxidiert werden und sich auflösen. Absorbiertes Wasser unterstützt dabei den Abtransport von Zink-Ionen durch die Grundierungsbeschichtung. Durch Reaktion mit Sauerstoff oder Kohlendioxid können sich letztendlich wasserunlösliche Zinksalze bilden, die kleine Fehlstellen im Lackschicht schließen können.

Als Bindemittel für Grundierungsbeschichtungen werden üblicherweise Epoxidharzen aufgrund ihrer guten Barrierewirkung, ihrer guten Substrathaftung sowie ihrer guten mechanischen Eigenschaften verwendet.

Um die Sedimentation der Metallpartikel entgegen zu wirken und die Lagerstabilität der Grundierungsbeschichtungen zu verbessern, werden oftmals geringe Mengen an Thixotropierungsadditiven zugegeben. Bekannte Thixotropierungsadditive sind organisch modifizierte Tonerden und pyrogene Kieselsäuren.

CN 110 172 288 offenbart eine Unterwasser-Verbund-Korrosionsschutzbeschichtung, bestehend aus einem Primer und einem Decklack. Der Primer ist eine Epoxid-Nano-Titanbeschichtung und der Decklack ist eine keramische Harzbeschichtung. Das eingesetzte pyrogene Siliziumdioxid wird als Thixotropierungsadditive eingesetzt.

KR 2014 0005476 beschreibt eine Epoxidharz-Pulverbeschichtungszusammensetzung mit verbesserter Korrosionsbeständigkeit, wobei ein aminoalkoholmodifiziertes Epoxidharz als Adhäsionspromotor zwischen der Grundierung und dem Decklack aufgetragen wird, um die Korrosionsbeständigkeit der Epoxidharz-Pulverbeschichtungszusammensetzung zu erhöhen. Die Kieselsäure und Metallteilchen dienen hierbei als übliche Füllstoffe.

CN 104 710 909 beschreibt korrosionsresistente Beschichtungen aus Epoxidharz, pyrogenem Si02 und sphärischem oder flockigem Siliziumpulver, wobei das pyrogene Siliziumdioxid als Anti-Sedimentationsadditiv eingesetzt wird.

Aus dem Stand der Technik sind öffentlich geförderte Projekte bekannt, um die Wirksamkeitsbeschränkungen von Zinkprimern zu beseitigen. Hierbei werden verschiedene Ansätze geprüft:

- Modifizierung der Partikelgrößenverteilung und Partikelform der Zinkpigmente,
- Einsatz von Zinklegierungspigmenten oder
- Zusatz von zinkfreien korrosionsinhibierenden Pigmenten oder
- Zusatz von Graphen.

Alle dieser Ansätze sind zeitaufwändig und kostenintensiv.

Es ist daher wünschenswert, Substanzen zu identifizieren, die den kathodischen Korrosionsschutz von Grundierungsbeschichtungen verbessern.

Da die Korrosionsschutzwirksamkeit des Metalls im Wesentlich auf dessen elektrischem Kontakt zum Substrat basiert, soll für einen guten Korrosionsschutz die Leitfähigkeit in der Beschichtung verbessert werden. Letztlich erfordern korrosive Vorgänge die Beweglichkeit bzw. den Austausch von Ladungsträgern, d.h. konkret von Ionen und Elektronen. Elektronen können dabei im Metall bewegt werden, Ionen in ionenleitenden Phasen. Dies bedeutet gleichzeitig, dass sich das korrodierende Metall in einem Elektrolyten, zum Beispiel Wasser als ionenleitende Flüssigkeit, befinden muss.

Überraschend wurde nun gefunden, dass die Verwendung von pyrogenem Siliziumdioxid zur Verbesserung des kathodischen Korrosionsschutzes von Grundierungsbeschichtungen, vorzugsweise von Zinkprimern, auf Basis von epoxyfunktionellen Polymeren und von mindestens einem Metallteilchen, ausgewählt aus Zink, Magnesium, Aluminium, Chromium, Silizium oder Mangan, deren Legierungen oder Mischungen davon. sich eignet.

Grundierungsbeschichtungen und Funktionsbeschichtungen werden hierbei als Synonyme verwendet.

Es wird vermutet, dass aufgrund der erhöhten ionischen Leitfähigkeit der kathodische Korrosionsschutz von metallteilchenhaltigen Funktionsbeschichtungen verbessert wird.

Weiterhin wird vermutet, dass die erhöhte ionische Leitfähigkeit auf die erhöhte Wasseraufnahme der Beschichtung zurückzuführen ist. Eine direkte Impedanzmessung der erfindungsgemäßen Grundierungsbeschichtung ist aufgrund der Anwesenheit von Metallteilchen, vorzugsweise Zinkstaub, nicht ergebnisrelevant möglich.

Aus diesem Grund wurde eine indirekte Messung der Wasseraufnahme bzw. Leitfähigkeit einer ausgehärteten Beschichtung auf Basis von epoxyfunktionellen Polymeren als Bindemittel, ohne Metallteilchen, vorzugsweise ohne Zinkstaub, durchgeführt.

Es hat sich herausgestellt, dass die Wasseraufnahme der ausgehärteten Beschichtung ohne Metallteilchen erhöht wurde, ebenso die Leitfähigkeit. Es sei hier auf die Beispiele verwiesen.

Es lässt daher den Schluss zu, dass die erfindungsgemäßen Grundierungsbeschichtungen ebenfalls eine erhöhte Wasseraufnahme und entsprechend auch eine verbesserte ionische Leitfähigkeit aufweisen, was zu einem verbesserten kathodischen Korrosionsschutz führt.

Bevorzugt werden dieses pyrogene Siliziumdioxid aus hydrophilen, hydrophoben und/oder teilhydrophoben, pyrogenen Siliziumdioxiden ausgewählt.

Der Begriff "hydrophil" im Sinne der vorliegenden Erfindung bezieht sich auf die Partikel, die mit reinem Wasser vollständig benetzt werden können. Hydrophobe Partikel können nicht durch reines Wasser benetzt werden; sie besitzen daher wasserabweisende Eigenschaften. Eine solche Hydrophobizität kann üblicherweise durch die Aufbringung entsprechender unpolarer Gruppen an die Kieselsäureoberfläche erreicht werden. Das Ausmaß der Hydrophobizität einer Kieselsäure kann unter anderem durch ihre Methanolbenetzbarkeit nach Corning Glass bestimmt werden, wie beispielsweise in WO2011/076518 A1, Seiten 5 - 6, näher beschrieben. In reinem Wasser trennt sich eine vollständig hydrophobierte Kieselsäure von der wässrigen Phase ab und schwimmt auf dessen Oberfläche, ohne benetzt zu werden. In reinem Methanol dagegen kann eine hydrophobe Kieselsäure durch Schütteln bzw. starkes Rühren benetzt werden und so homogen im Lösungsmittelvolumen verteilt werden. Bei der Messung der Methanolbenetzbarkeit wird der maximale Gehalt an Methanol in einem Methanol-Wasser Testgemisch bestimmt, bei dem gerade noch keine Benetzung der Kieselsäure stattfindet, also idealer Weise 100% der eingesetzten Kieselsäure sich nach dem Kontakt mit dem Testgemisch unbenetzt bleibt und separiert. Dieser Gehalt an Methanol in dem Methanol-Wasser Gemisch in Vol. % wird Methanolbenetzbarkeit genannt. Je höher eine solche Methanolbenetzbarkeit ist, desto hydrophober ist die Kieselsäure. Je niedriger die Methanolbenetzbarkeit, desto geringer ist die Hydrophobie.

Das erfindungsgemäße hydrophile Siliziumdioxid weist vorzugsweise eine Methanolbenetzbarkeit von 0 Vol.-% Methanol in einem Methanol-Wasser Gemisch auf. Die Kieselsäure, wird also von reinem Wasser vollständig benetzt.

Das erfindungsgemäße hydrophobe Siliziumdioxid weist vorzugsweise eine Methanolbenetzbarkeit von > 0 Vol.-% Methanol in einem Methanol-Wasser Gemisch auf, bevorzugt liegt sie zwischen 5 - 90 Vol.-% Methanol in einem Methanol-Wasser Gemisch, besonders bevorzugt zwischen 20 - 75 Vol.-% Methanol in einem Methanol-Wasser Gemisch.

Kieselsäure und Siliziumdioxid sind als Synonyme zu verwenden.

Es war des Weiteren überraschend, dass sowohl die hydrophilen als auch die hydrophoben Siliziumdioxiden enthaltenen auf epoxyfunktionellen Polymeren basierten Beschichtungen eine erhöhte Wasseraufnahme und eine erhöhte Leitfähigkeit Vergleich zu einer Beschichtung ohne Siliziumdioxid aufweisen.

Vorzugsweise wird das Siliziumdioxid in Pulverform eingesetzt. Generell ist natürlich auch Siliziumdioxid in dispergierter Form geeignet.

Strukturmodifizierte AEROSIL®-Typen (wie zum Beispiel das AEROSIL® R 9200), erhältlich von der Fa. Evonik, wurden vor mehr als 10 Jahren eingeführt, um die Kratzfestigkeit und mechanische Beständigkeit von Produkten der Beschichtungs- und Klebstoff-/Dichtstoff-Industrie zu verbessern.

Es ist vorstellbar, dass generell alle strukturmodifizierte Siliziumdioxidtypen für die erfindungsgemäße Verwendung geeignet sind.

Vorzugsweise weisen die Siliziumdioxidpartikeln eine Oberflächenmodifizierung mit Silanen ausgewählt aus Dimethyldichlorsilan, Trimethylmonochlorsilan, Methyltrichlorsilan, Propyltrichlorsilan, Trimethoxypropylsilan, Triethoxypropylsilan, Trimethoxy-i-Butylsilan, Triethoxy-i-Butylsilan, Trimethoxyoctylsilan, Triethoxyoctylsilan, Trimethoxyhexadecylsilan, Octyltriethoxysilan und Triethoxyhexadecylsilan, Silazanen ausgewählt aus 1,1,1-Trimethyl-N-trimethylsilyl-silanamin und N-Methyl-aza-2,2,4-trimethylsilacyclopentane oder Siloxanen ausgewählt aus Octamethyltetracyclosiloxan, Decamethylpentacyclosiloxan, Dodecamethylhexacyclosiloxan, Polydimethylsiloxan, Methoxy- und Hydroxy-terminiertem Polydimethylsiloxan, oder Kombinationen daraus, auf. Derartige oberflächenmodifizierten Siliziumdioxidpartikel sind beispielsweise unter der Bezeichnung Aerosil® (Fa. Evonik), Cabo-sil® (Fa. Cabot) oder HDK (Fa. Wacker) erhältlich.

Vorzugsweise weisen die Siliziumdioxidpartikeln eine nummerische mittlere Primärpartikelgröße zwischen 2 - 100 nm, bevorzugt 5 - 50 nm auf. Eine nummerische mittlere Partikelgröße kann mittels Elektronenmikroskopie bestimmt werden.

Vorzugsweise weisen die Siliziumdioxidpartikeln eine BET-Oberfläche von 20 - 1000 m$^2$/g, bevorzugt 50 - 500 m$^2$/g auf. Die spezifische Oberfläche, auch vereinfacht BET Oberfläche genannt, wird nach DIN 9277:2014 durch Stickstoffadsorption nach dem Brunauer-Emmett-Teller-Verfahren bestimmt.

Das für erfindungsgemäße Verwendung eingesetzte Siliziumdioxid kann eine Stampfdichte von bis zu 400 g/L, bevorzugt von 10 bis 100 g/L, besonders bevorzugt von 20 bis 80 g/L, ganz besonders bevorzugt 30 bis 70 g/L aufweisen. Stampfdichten verschiedener pulverförmiger oder grobkörniger granulärer Materialien können nach DIN ISO 787-11:1995 "Allgemeine Prüfverfahren für Pigmente und Füllstoffe - Teil 11: Bestimmung des Stampfvolumens und der Stampfdichte" bestimmt werden. Dabei wird die Fülldichte einer Schüttung nach dem Rütteln und Stampfen gemessen.

Bevorzugt wird das Siliziumdioxid in einer Menge von 0,01 - 15 Gew.-%, bevorzugt 0,05 - 5 Gew.-%, besonders bevorzugt 0,1 - 3 Gew.-% bezogen auf die Gesamtmenge der Funktionsbeschichtung verwendet.

Vorzugsweise handelt es sich bei der Funktionsbeschichtung um einer Grundierungsbeschichtung, vorzugsweise um einen Zinkprimer.

Bevorzugt enthält der Zinkprimer Zinkstaub oder Zinkflakes.

Des Weiteren weisen der Zinkprimer als auch die Grundierungsbeschichtung vorzugsweise ein Bindemittelsystem auf Basis von einem Epoxidharz auf, ausgewählt aus Bisphenol A Diglycidylether und dessen Oligomeren, teilweise oder vollständig hydrogeniertem Bisphenol A Diglycidylether und dessen Oligomeren, bromiertem Bisphenol A Diglycidylether und dessen Oligomeren, Bisphenol F Diglycidylether und dessen Oligomeren, teilweise oder vollständig hydrogeniertem Bisphenol F Diglycidylether und dessen Oligomeren, Bisphenol S Diglycidylether und dessen Oligomeren, Novolac basierten Epoxidharzen wie beispielsweise Epoxy Phenol Novolac (EPN) oder Epoxy Cresol Novolac (ECN), hydrogenierten Novolac basierten Epoxidharzen, Kondensate von einer von den vorher genannten Epoxidharzen mit Silikonharzen, oder Gemische daraus. Derartige Epoxidharze sind beispielsweise unter der Bezeichnung Epikote und Eponex (Fa. Hexion), Araldite (Fa. Huntsman), Silikopon (Fa. Evonik) oder D.E.R. (Fa. Dow Chemical) erhältlich.

Bevorzugt enthält der Zinkprimer Bisphenol A Diglycidylether oder dessen Oligomere.

Darüber hinaus kann die Grundierungsbeschichtung oder der Zinkprimer einen Härter aufweisen. Grundsätzlich kommen alle Härter in Frage, die das epoxyfunktionelle Polymer aushärten können.

Vorzugsweise sind die Härter ausgewählt aus der Gruppe der Säureanhydriden, aus der Gruppe der (Poly) Thiolen, der Aminosilanen, der (Poly)Isocyanaten, der aliphatischen, cycloaliphatischen und aromatischen Aminen, Mannichbase Derivaten eines aliphatischen, cycloaliphatischen oder aromatischen Amins, Phenalkaminen, Polyamide oder Amidoamine auf Basis eines aliphatischen, cycloaliphatischen oder aromatischen Amins, und Poly(alkylene Oxide) Diaminen oder Triaminen. Derartige Härter sind beispielsweise unter der Bezeichnung Ancamine und Ancamide (Fa. Evonik), Aradur und Jeffamine (Fa. Huntsman), Epikure (Fa. Hexion) oder D.E.H. (Fa. Dow Chemical) erhältlich.

Darüber hinaus kann die Funktionsbeschichtung oder der Zinkprimer weitere Zusatzstoffe enthalten, ausgewählt aus Reaktivverdünner wie beispielsweise Monoglycidylether, organischen Lösemitteln wie beispielsweise Xylol, Katalysatoren oder Beschleuniger wie beispielsweise ternären Aminen, Entschäumer, Verlaufshilfsmittel und Füllstoffe wie beispielsweise Talkum oder Quarzmehl.

Die folgenden Beispiele dienen dem Fachmann allein zur Erläuterung dieser Erfindung

**Methoden**

**Impedanzmessungen**

Impedanzmessungen wurden mit einem IM6 elektrochemisches Messsystem in Kombination mit der AMZ60 Messzelle und der Thales XT Version 5.3.0 Software der Firma ZAHNER-Elektrik, angelehnt an DIN EN ISO 16773-1 bis -4 "Elektrochemische Impedanzspektroskopie (EIS) an beschichteten und unbeschichteten Proben" durchgeführt. Die Messzelle enthält einen Zylinder aus Plexiglas (⌀ 33,8 mm), gefüllt mit 3 Gew.-% NaCl-Lösung. Es wurde eine 3-Elektrodenkonfiguration benutzt, mit einem rostfreien Stahlstab als Gegenelektrode und einer MF-2052 RE-5B Ag/AgCl/3M NaCl Referenzelektrode der Firma BASi. Das Impedanzspektrum wurde mit einer Amplitude von 10 mV im Frequenzbereich 1 Hz - 100 kHz gemessen, und zwar nach einer halben Stunde, nach 2, 6, 14 und 28 Tagen. Während der Messung befand sich die Messzelle in einem Faradaykäfig, dass mit der Erdverbindung des elektrochemischen Messsystems verbunden war. Zwischen den Messungen wurden die Bleche ebenfalls in einer 3 Gew.-% NaCl-Lösung gelagert. Die Temperatur im Labor lag bei 20 °C, die Luftfeuchtigkeit bei 30%.

Die Kapazität C der Beschichtung wurde anhand der gemessenen Impedanz |$Z$| und Phasenwinkel $\varphi$ bei einer Frequenz $f$ von 10 kHz berechnet, wie beschrieben in Progress in Organic Coatings 2018 Vol. 124, S. 249 - 255. Folgende Gleichung wurde hierbei benutzt:

$$C = -\sin\varphi \,/ 2\pi f\,|Z|$$

Der Volumenanteil Wasser $\Phi_{v,wasser}$ in der Beschichtung zu einem Zeitpunkt $t$ wurde mit einer modifizierten Brasher-Kingsbury-Gleichung berechnet, wie ebenfalls beschrieben in Progress in Organic Coatings 2018 Vol. 124, S.249-255:

$$\phi_{v,wasser} = (log\varepsilon_w)^{-1}\big(1 - \phi_{v,sil}\big)log(C(t)d(0)/C(0)d(t))$$

mit der $\Phi_{v,sil}$ der Volumenanteil Siliziumdioxid in der Beschichtung, $\varepsilon_w$ die relative dielektrische Konstante von Wasser und $d(t)$ die Schichtdicke. Durch die Adsorption von Wasser ist die Schichtdicke nicht konstant, sondern nimmt mit der Zeit $t$ zu. Die Schichtdicke wurde unmittelbar vor jeder Impedanzmessung mit Hilfe eines Byko-test MPOR Schichtdickenmessgerät der Fa. Fischer gemessen, und zwar an gleicher Stelle. Als Schichtdicke wurde der Mittelwert von 6 Messungen genommen.

In unseren Berechnungen sind wir von einem Volumenanteil Silika von 1,0% und eine relative dielektrische Konstante von 80,1 (Quelle: CRC Handbook of Chemistry and Physics, 58.Ausgabe, Ed. Robert C. Weast, CRC Press, S. E-61) ausgegangen. $C(0)$ ist die Kapazität zum Zeitpunkt $t=0$. Zur Berechnung von $C(0)$ würde die Impedanz bei 10 kHz nach einer halben Stunde genommen.

Die ionische Leitfähigkeit einer Beschichtung kann ebenfalls mit Hilfe der Impedanzspektroskopie bestimmt werden. Wie in der DIN EN ISO 16773-4 beschrieben, kann das gemessene Impedanzspektrum mit einem Ersatzschaltkreis nach Randles angepasst werden. Dadurch erhält man den Ohm'schen Widerstand $R_p$ der jeweiligen Beschichtung. Die Prozedur wurde mit Hilfe der Software Thales XT Version 5.3.0 durchgeführt. Der Ohm'sche Widerstand wird multipliziert mit der Größe der gemessenen Oberfläche $A$ und geteilt durch die Schichtdichte $d$ zum jeweiligen Zeitpunkt, damit diese unabhängig wird von beiden. Die elektrische Leitfähigkeit $\kappa$ des Beschichtungsmaterials ist dessen Inversion, wie folgend:

$$\kappa = \left(\frac{R_p A}{d}\right)^{-1}$$

Die gemessene Oberfläche A ist die innere Oberfläche des Plexiglas Zylinders, 8.93 cm$^2$.

**Salzsprühtest**

Salzsprühtests wurden mit einem Q-Fog Salzsprühkammer der Firma Q-Lab angelehnt an ASTM B117 durchgeführt. Die Beurteilung der Bleche erfolgte nach DIN EN ISO 4628 -2 (Blasenbildung), -3 (Rostbildung) und -4 (Rissbildung).

**Materialien und Geräte**

- Epikote® Resin 828, Fa. Hexion (Bisphenol A Diglycidylether Oligomer)
- Aerosil® 200, Fa. Evonik Industries
- Aerosil® R972, Fa. Evonik Industries
- Aerosil® R974, Fa. Evonik Industries
- Aradur® 450 BD, Fa. Huntsman (Polyamidoamine Härter)
- Zn-Staub super extra, Fa. EverZinc
- n-Butylacetat, Firma Reininghaus Chemie
- Natriumchlorid BioXtra, ≥99.5%, Fa. Sigma Aldrich
- IM6 elektrochemisches Messsystem, Fa. ZAHNER-Elektrik
- AMZ-60 Messzelle, Fa. ZAHNER-Elektrik
- MF-2052 RE-5B Referenzelektrode, Fa. BASi
- Aluminiumbleche, 3" x 6", Fa. Q-Lab
- Q-Fog Salzsprühkammer, Fa. Q-Lab
- Byko-test MPOR Schichtdickenmessgerät, Fa. Fischer

**Beispiele**

**1. Herstellung von ausgehärteten Beschichtungen auf Basis von epoxyfunktionellen Polymeren als Bindemittel**

In einem 180 mL PE-Becher wurden gemäß den Angaben aus Tabelle 1 (die Mengenangaben sind in Gewichtsteilen aufgeführt) zuerst das Epoxidharz Epikote® 828 vorlegt. Anschließend wurde n-Butylacetat unter Rühren bei 2,000 UpM mit einem Dispermaten der Firma VMA Getzmann hinzugefügt und für weitere 3 Minuten bei 2,000 UpM homogenisiert. Danach wurde Aerosil zugegeben und ebenfalls für 3 Minuten bei 2,000 UpM homogenisiert. Abschließend wurde Aradur® 450 BD unter Rühren bei 2,000 UpM zugegeben, und 3 Minuten bei 2,000 UpM homogenisiert.

Die semi-erfindungsgemäßen Beschichtungszusammensetzungen B1 - B3 sowie das Vergleichsbeispiel ohne Siliziumdioxid VB wurden sofort nach Herstellung mit Hilfe eine 100 $\mu$m Spiralrakels auf jeweils drei Stahl-Bleche der Firma Q-Labs appliziert. Die insgesamt 12 Bleche wurden anschließend 7 Tagen bei Raumtemperatur ausgehärtet. Die Schichtdicke lag bei ca. 70 $\mu$m.

**Tabelle 1: Zusammensetzung der ausgehärteten Beschichtungen auf Basis von epoxyfunktionellen Polymeren.**

|  | VB | B1 | B2 | B3 |
|---|---|---|---|---|
| Epikote® 828 | 80 | 80 | 80 | 80 |
| Aerosil® 200 | - | 2 | - | - |
| Aerosil® R972 | - | - | 2 | - |
| Aerosil® R974 | - | - | - | 2 |
| n-Butylacetat | 18 | 18 | 18 | 18 |
| Aradur® 450 BD | 49,4 | 49,4 | 49,4 | 49,4 |

**2. Bestimmung der Wasseraufnahme**

Das Impedanzspektrum der applizierten Bleche B1 - B3 sowie VB wurden, wie oben beschrieben, gemessen. Der Volumenanteil Wasser $\Phi_{v,wasser}$ in der ausgehärteten Beschichtungen zu den genannten Zeitpunkten $t$ wurde gemäß o.g. Formel berechnet.

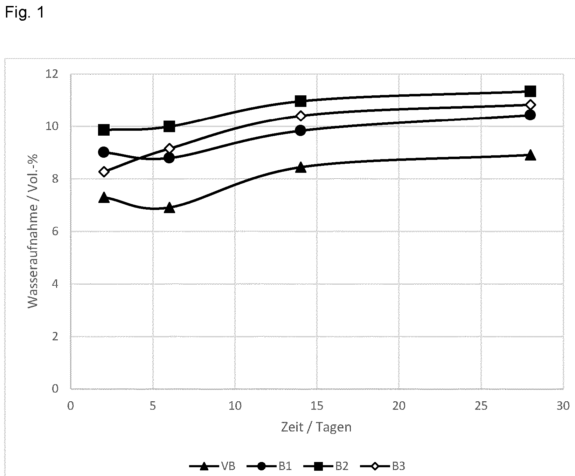

Das Ergebnis ist in Fig.1 dargestellt. Die Werte sind Mittelwerte von 3 verschiedenen Blechen, die alle insgesamt dreimal gemessen wurden. Es konnte gezeigt werden, dass die Zugabe von Siliziumdioxid zu einer Erhöhung der Wasseraufnahme führt. Das Vergleichsbeispiel weist nur einen geringeren Wasseranteil auf.

**3. Bestimmung der Leitfähigkeit**

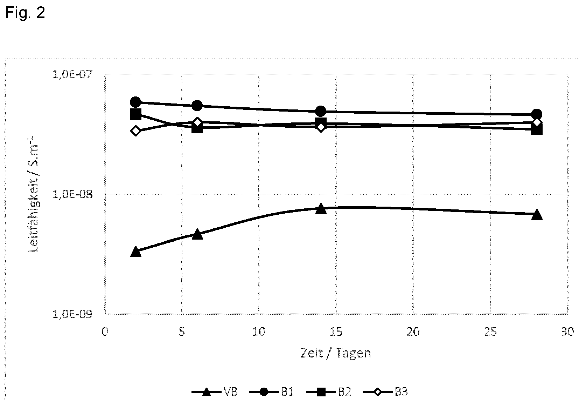

Aus dem Impedanzspektrum der applizierten Bleche B1 - B3 sowie VB wurde deren Leitfähigkeit gemäß o.g. Formel berechnet. Das Ergebnis ist in Fig. 2 dargestellt. Die Zahlen sind Mittelwerte von 3 Blechen, die alle insgesamt dreimal gemessen wurden. Durch die Zugabe von Siliziumdioxid konnte festgestellt werden, dass die semi-erfindungsgemäßen Beschichtungen eine erhöhte ionische Leitfähigkeit aufweisen, im Gegensatz zu einer Beschichtung ohne Siliziumdioxid (VB)

**4. Herstellung von erfindungsgemäßen Zinkprimer**

Die erfindungsgemäßen Zinkprimer ZP1 - ZP3 wurden gemäß den Angaben aus Tabelle 2 (die Mengenangaben sind in Gewichtsteilen aufgeführt) hergestellt, mit der Maßgabe, dass der Zinkstaub zusammen mit dem Aerosil zu dem mit Butylacetat verdünnten Epikote® 828 gegeben und für 3 Minuten bei 2,000 UpM homogenisiert wurde. Abschließend wurde Aradur® 450 BD unter Rühren bei 2,000 UpM zugegeben, und 3 Minuten bei 2,000 UpM homogenisiert.

**Tabelle 2: Zusammensetzung der Zinkprimer. Alle Angaben in Gewichtsteilen.**

| Zinkprimer | VZP | ZP1 | ZP2 | ZP3 |
|---|---|---|---|---|
| Epikote® 828 | 17 | 17 | 17 | 17 |
| Aerosil® 200 | - | 2 | - | - |

(fortgesetzt)

| Zinkprimer | VZP | ZP1 | ZP2 | ZP3 |
|---|---|---|---|---|
| Aerosil® R972 | - | - | 2 | - |
| Aerosil® R974 | - | - | - | 2 |
| n-Butylacetat | 16 | 16 | 16 | 16 |
| Aradur® 450 BD | 10,5 | 10,5 | 10,5 | 10,5 |
| Zinkstaub | 65 | 65 | 65 | 65 |

Die erfindungsgemäßen Zinkprimer ZP1 - ZP3 sowie das Vergleichsbeispiel ohne Siliziumdioxid VZP wurden sofort nach Herstellung mit Hilfe eine 100 $\mu$m Spiralrakels auf jeweils zwei Stahl-Bleche der Firma Q-Labs appliziert. Die insgesamt 8 Bleche wurden anschließend 7 Tagen bei Raumtemperatur ausgehärtet.

**5. Salzsprühtest**

Es wurden jeweils zwei Bleche mit dem applizierten Zinkprimer VZP, ZP1 - ZP3 aus Beispiel 2 untersucht. Diese wurden für 1500 Stunden im Salzsprühkammer bewittert. Das Ergebnis entspricht den Mittelwert der beiden Bleche. Blasengrad und -größe, Rostgrad und Rissgrad wurden nach DIN EN ISO 4628 beurteilt und in Tabelle 3 dargestellt.

Es zeigt sich, dass die Zunahme des Wassergehaltes und die Erhöhung der Leitfähigkeit durch die Zugabe von Siliziumdioxid mit reduzierter Blasen-, Rost- und Rissbildung einher geht. Durch die Verwendung von Siliziumdioxid konnte gezeigt werden, dass der kathodische Korrosionsschutz des Zinkprimers verbessert wurde.

**Tabelle 3: Bewertung des Salzsprühtests**

| Primer | VZP | ZP1 | ZP2 | ZP3 |
|---|---|---|---|---|
| Blasengrad | 5 (S5) | 3 (S2) | 3 (S2) | 3 (S2) |
| Rostgrad | 3 | 1 | 1 | 1 |
| Rissgrad | 1 | 0 | 0 | 0 |

**Patentansprüche**

1. Verwendung von Siliziumdioxid zur Verbesserung des kathodischen Korrosionsschutzes von Grundierungsbeschichtungen, vorzugsweise eines Zinkprimers, auf Basis von epoxyfunktionellen Polymeren und von mindestens einem Metallteilchen, **dadurch gekennzeichnet, dass** das Siliziumdioxid zur Grundierungsbeschichtung zugegeben wird.

2. Verwendung nach Anspruch 1, **dadurch gekennzeichnet, dass** es sich bei dem Siliziumdioxid um pyrogenes Siliziumdioxid handelt, vorzugsweise ausgewählt aus hydrophilen, hydrophoben und/oder teilhydrophoben, pyrogenen Siliziumdioxiden.

3. Verwendung nach einem der vorgenannten Ansprüche, **dadurch gekennzeichnet, dass** das Siliziumdioxid, vorzugsweise Siliziumdioxidpartikel, eine Oberflächenmodifizierung mit Silanen ausgewählt aus Dimethyldichlorsilan, Trimethoxy-i-Butylsilan, Trimethoxyoctylsilan, Trimethoxyhexadecylsilan, Octyltriethoxysilan, Silazanen ausgewählt aus 1,1,1-Trimethyl-N-trimethylsilyl-silanamin und N-Methyl-aza-2,2,4-trimethylsilacyclopentane oder Siloxanen ausgewählt aus Octamethyltetracyclosiloxan, Decamethylpentacyclosiloxan oder Polydimethylsiloxan, oder Kombinationen daraus, aufweist.

4. Verwendung nach einem der vorgenannten Ansprüche, **dadurch gekennzeichnet, dass** die pyrogene Siliziumdioxidpartikeln eine BET-Oberfläche von 20 $m^2$/g - 1000 $m^2$/g, bevorzugt 50 $m^2$/g - 500 $m^2$/g, bestimmt nach DIN 9277:2014 durch Stickstoffadsorption nach dem Brunauer-Emmett-Teller-Verfahren, aufweist.

5. Verwendung nach einem der vorgenannten Ansprüche, **dadurch gekennzeichnet, dass** das Siliziumdioxid in einer Menge von 0,01 - 15 Gew.-%, bevorzugt 0,05 - 5 Gew.-%, besonders bevorzugt 0,1 - 3 Gew.-% bezogen auf die Gesamtmenge der Funktionsbeschichtung verwendet wird.

**6.** Verwendung nach einem der vorgenannten Ansprüche, **dadurch gekennzeichnet, dass** die Metallteilchen ausgewählt ist aus Zink, Magnesium, Aluminium, Chromium, Silizium oder Mangan, deren Legierungen oder Mischungen davon.

**7.** Verwendung nach einem der vorgenannten Ansprüche, **dadurch gekennzeichnet, dass** der Zinkprimer Zinkstaub oder Zinkflakes enthält.

**8.** Verwendung nach einem der vorgenannten Ansprüche, **dadurch gekennzeichnet, dass** der Zinkprimer ein Bindermittelsystem auf Basis eines Epoxidharzes aufweist, ausgewählt aus Bisphenol A Glycidylether, Bisphenol F Glycidylether, Novolac basierten Epoxidharzen oder Gemische daraus.

**9.** Verwendung nach einem der vorgenannten Ansprüche, **dadurch gekennzeichnet, dass** die Funktionsbeschichtung einen Härter bevorzugt ausgewählt aus der Gruppe der aliphatischen, cycloaliphatischen und aromatischen Aminen, und darauf basierten Polyamiden oder Amidoaminen aufweist.

## Claims

**1.** Use of silicon dioxide for improving the cathodic anticorrosion effect of ground coats, preferably of a zinc primer, based on epoxy-functional polymers and at least one metal particle, **characterized in that** the silicon dioxide is added to the ground coat.

**2.** Use according to Claim 1, **characterized in that** the silicon dioxide is pyrogenic silicon dioxide, preferably selected from hydrophilic, hydrophobic and/or semihydrophobic pyrogenic silicon dioxides.

**3.** Use according to any of the preceding claims, **characterized in that** the silicon dioxide, preferably silicon dioxide particles, has a surface modification with silanes selected from dimethyldichlorosilane, trimethoxy-i-butylsilane, trimethoxyoctylsilane, trimethoxyhexadecylsilane, octyltriethoxysilane, silazanes selected from 1,1,1-trimethyl-N-(trimethylsilyl)silanamine and N-methyl-aza-2,2,4-trimethylsilacyclopentane or siloxanes selected from octamethyltetracyclosiloxane, decamethylpentacyclosiloxane or polydimethylsiloxane or combinations thereof.

**4.** Use according to any of the preceding claims, **characterized in that** the pyrogenic silicon dioxide particles have a BET surface area of 20 $m^2$/g - 1000 $m^2$/g, preferably 50 $m^2$/g - 500 $m^2$/g, determined according to DIN 9277:2014 by nitrogen adsorption in accordance with the Brunauer-Emmett-Teller method.

**5.** Use according to any of the preceding claims, **characterized in that** the silicon dioxide is employed in an amount of 0.01-15% by weight, preferably 0.05-5% by weight, particularly preferably 0.1-3% by weight, based on the total amount of the functional coating.

**6.** Use according to any of the preceding claims, **characterized in that** the metal particles are selected from zinc, magnesium, aluminium, chromium, silicon or manganese, alloys thereof or mixtures thereof.

**7.** Use according to any of the preceding claims, **characterized in that** the zinc primer contains zinc dust or zinc flakes.

**8.** Use according to any of the preceding claims, **characterized in that** the zinc primer comprises a binder system based on an epoxy resin selected from bisphenol A glycidyl ether, bisphenol F glycidyl ether, novolac-based epoxy resins or mixtures thereof.

**9.** Use according to any of the preceding claims, **characterized in that** the functional coating comprises a curing agent preferably selected from the group of aliphatic, cycloaliphatic and aromatic amines and polyamides or amidoamines based thereon.

## Revendications

**1.** Utilisation de dioxyde de silicium pour l'amélioration de la protection contre la corrosion cathodique de revêtements en couche primaire, de préférence d'un primaire à base de zinc, à base de polymères à fonction époxy et d'au moins une particule métallique, **caractérisée en ce que** le dioxyde de silicium est ajouté au revêtement en couche primaire.

**2.** Utilisation selon la revendication 1, **caractérisée en ce que** pour ce qui est du dioxyde de silicium il s'agit de silice pyrogénée, de préférence choisie parmi les silices pyrogénées hydrophiles, hydrophobes et/ou partiellement hydrophobes.

**3.** Utilisation selon l'une quelconque des revendications précédentes, **caractérisée en ce que** le dioxyde de silicium, de préférence la particule de silice, a subi une modification de surface avec des silanes choisis parmi le diméthyldichlorosilane, le triméthoxy-isobutylsilane, le triméthoxy-octylsilane, le triméthoxyhexadécylsilane, l'octyltriéthoxysilane, des silazanes choisis parmi la 1,1,1-triméthyl-N-triméthylsilyl-silanamine et le N-méthyl-aza-2,2,4-triméthylsilacyclopentane ou des siloxanes choisis parmi l'octaméthyltétracyclosiloxane, le décaméthylpentacyclosiloxane ou le polydiméthylsiloxane, ou des associations de ceux-ci.

**4.** Utilisation selon l'une quelconque des revendications précédentes, **caractérisée en ce que** les particules de silice pyrogénée présentent une surface BET de 20 $m^2$/g - 1 000 $m^2$/g, de préférence 50 $m^2$/g - 500 $m^2$/g, déterminée selon DIN 9277:2014 par adsorption d'azote selon le procédé Brunauer-Emmett-Teller.

**5.** Utilisation selon l'une quelconque des revendications précédentes, **caractérisée en ce que** le dioxyde de silicium est utilisé en une quantité de 0,01 - 15 % en poids, de préférence 0,05 - 5 % en poids, de façon particulièrement préférée 0,1 - 3 % en poids par rapport à la quantité totale du revêtement fonctionnel.

**6.** Utilisation selon l'une quelconque des revendications précédentes, **caractérisée en ce que** la particule métallique est choisie parmi le zinc, le magnésium, l'aluminium, le chrome, le silicium ou le manganèse, leurs alliages ou mélanges.

**7.** Utilisation selon l'une quelconque des revendications précédentes, **caractérisée en ce que** le primaire à base de zinc contient de la poudre de zinc ou des paillettes de zinc.

**8.** Utilisation selon l'une quelconque des revendications précédentes, **caractérisée en ce que** le primaire à base de zinc comporte un système de liant à base d'une résine époxydique choisie parmi l'éther glycidylique de bisphénol A, l'éther glycidylique de bisphénol F, les résines époxydiques à base de novolaque ou leurs mélanges.

**9.** Utilisation selon l'une quelconque des revendications précédentes, **caractérisée en ce que** le revêtement fonctionnel comporte un durcisseur de préférence choisi dans le groupe des amines aliphatiques, cycloaliphatiques et aromatiques, et des polyamides ou amidoamines à base de celles-ci.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 110172288
- KR 20140005476
- CN 104710909
- WO 2011076518 A1

**In der Beschreibung aufgeführte Nicht-Patentliteratur**

- *Progress in Organic Coatings*, 2018, vol. 124, 249-255
- *Progress in Organic Coatings*, 2018, vol. 124, 249-255